(19) **Europäisches Patentamt / European Patent Office / Office européen des brevets**

(11) **EP 3 573 828 B1**

(12) # EUROPEAN PATENT SPECIFICATION

(45) Date of publication and mention of the grant of the patent:
**11.02.2026 Bulletin 2026/07**

(21) Application number: **18713396.2**

(22) Date of filing: **19.01.2018**

(51) International Patent Classification (IPC):
**B32B 27/08** (2006.01)   **B32B 27/32** (2006.01)
**B32B 7/022** (2019.01)

(52) Cooperative Patent Classification (CPC):
**B32B 27/08; B32B 7/022; B32B 27/32;**
**B32B 27/327;** B32B 2250/03; B32B 2250/242;
B32B 2307/30; B32B 2307/51; B32B 2307/54;
B32B 2307/558; B32B 2307/72; B32B 2307/732;
B32B 2307/748; B32B 2405/00; B32B 2439/70;
(Cont.)

(86) International application number:
**PCT/US2018/014383**

(87) International publication number:
**WO 2018/140308 (02.08.2018 Gazette 2018/31)**

(54) **MULTILAYER FILMS HAVING TUNABLE STRAIN HARDENING**

MEHRSCHICHTIGE FOLIE MIT ABSTIMMBAREN VERFESTIGUNG EIGENSCHAFTEN

FILMS MULTICOUCHES PRÉSENTANT PROPRIÉTÉS D'ÉCROUISSAGE AJUSTABLES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.01.2017 US 201762450772 P**

(43) Date of publication of application:
**04.12.2019 Bulletin 2019/49**

(73) Proprietors:
• **Dow Global Technologies LLC**
**Midland, MI 48674 (US)**
• **PT Dow Indonesia**
**Jakarta 12920 (ID)**

(72) Inventors:
• **LEE, Edward L.**
**Singapore 638025 (SG)**

• **MA, Eng Kian**
**Klang, SL 41200 (MY)**
• **PATEL, Rajen M.**
**Freeport, Texas 77541 (US)**
• **YAP, Peter**
**Singapore 598729 (SG)**
• **GOH, Hwee-Lun**
**Singapore 638025 (SG)**
• **SETYOGROHO, Adit Pradhana Jayusman**
**Jakarta 10210 (ID)**

(74) Representative: **Boult Wade Tennant LLP**
**Salisbury Square House**
**8 Salisbury Square**
**London EC4Y 8AP (GB)**

(56) References cited:
WO-A1-2017/039986   WO-A1-2017/039987
US-A1- 2007 065 650   US-A1- 2014 272 443
US-B1- 6 265 055   US-B1- 6 361 875

**(Cont. next page)**

(52) Cooperative Patent Classification (CPC): (Cont.)
B32B 2553/00

**Description**

## CROSS-REFERENCE TO RELATED APPLICATIONS

This application claims priority to U.S. Provisional Patent Application No. 62/450,772 filed on January 26, 2017.

## TECHNICAL FIELD

Embodiments of the present disclosure are generally related to multilayer films, and are specifically related to multilayer films including LDPE.

## BACKGROUND

Multilayer films can include films such as cast films or blown films, which may include silage wrap, stretch wrap, and surface protective films. Linear low density polyethylene (LLDPE) and/or high density polyethylene (HDPE) are widely used for producing multilayer films with high tensile strength and high impact strength. Conventional attempts to optimize film tensile strength and yield strength by blending polymers have yielded films with increased yield strength, but impact strengths that were lower than films made from one of the components used in the blend. US 6,361,875 B1 relates to a multi-layer stretch film comprising from 10 to 25 percent by weight of a first outer layer comprising a blend of 50 to 80 percent by weight of a first linear low density polyethylene product, 10 to 40 percent by weight of a second linear low density polyethylene product, and 3 to 17 percent by weight of a low polydispersity polymer product; from 20 to 40 percent by weight of a first inner layer comprising a blend of 85 to 96 percent by weight of linear low density polyethylene product and from 4 to 15 percent by weight of a low density polyethylene product; from 10 to 30 percent by weight of a core layer comprising linear low density polyethylene products; from 20 to 40 percent by weight of a second inner layer comprising a blend of 85 to 96 percent by weight of linear low density polyethylene product and from 4 to 15 percent by weight of a low density polyethylene product; and from 10 to 25 percent by weight of a second outer layer comprising a blend of 50 to 80 percent by weight of a first linear low density polyethylene product, 10 to 40 percent by weight of a second linear low density polyethylene product, and 3 to 17 percent by weight of a low polydispersity polymer product.

Accordingly, there is a need to develop multilayer films having increased strain hardening and yield strength while enabling the film to remain stretchable.

## SUMMARY

Embodiments are directed to multilayer cast films comprising low density polyethylene (LDPE) having a density of 0.918 g/cc to 0.931 g/cc and a melt index ($I_2$) of from 0.15 g/10 min to 6 g/10 min. The multilayer films may yield improved strain hardening and yield strength.

According to the first aspect there is provided a multilayer cast film comprising:

a cling layer comprising:

from 50 wt.% to 95 wt.% butene-linear low density polyethylene (butene-LLDPE); and

an ultra low density polyethylene (ULDPE) having a density of 0.895 g/cc to 0.915 g/cc wherein density is measured in accordance with ASTM D792 and a melt index ($I_2$) of from 2 g/10 min to 10 g/10 min when measured according to ASTM D1238 at 190 °C and 2.16 kg load;

a propylene interpolymer comprising at least 60 wt.% units derived from propylene and between 1 and 40 wt% units derived from ethylene, wherein the propylene interpolymer has a density of from 0.840 g/cm$^3$ to 0.900 g/cm$^3$ wherein density is measured in accordance with ASTM D792 or ASTM D1505, a highest differential scanning calorimetry (DSC) melting peak temperature of from 50.0 °C to 120.0 °C, a melt flow rate, MFR2, of from 1 g/10 min to 100 g/10 min when measured according to ASTM D1238 at 230 °C and 2.16 kg load, and a molecular weight distribution (MWD) of less than 4.0 wherein molecular weight distribution is measured as described in the description; or blends thereof;

a release layer comprising a first linear low density polyethylene (first LLDPE) having a density of from 0.915 to 0.938 g/cc wherein density is measured in accordance with ASTM D792 and a melt index ($I_2$) of from 0.5 g/10 min to 10 g/10 min; and

at least one core layer disposed between the cling layer and the release layer, wherein each of the at least one core layers comprises a second linear low density polyethylene (second LLDPE) having a density of from 0.905 to 0.930 g/cc and a melt index ($I_2$) of from 0.5 g/10 min to 10 g/10 min;
wherein:

one or more of the cling layer, the release layer, or the at least one core layer further comprise a low density polyethylene having a density of 0.918 g/cc to 0.931 g/cc wherein density is measured in accordance with ASTM D792 or ASTM D1505 and a melt index ($I_2$) of from 0.15 g/10 min to 6 g/10 min when measured according to

ASTM D1238 at 190 °C and 2.16 kg load;
the multilayer cast film comprises from 3 wt% to 7 wt%, based on a total amount of polymers present in the multilayer cast film, of the low density polyethylene (LDPE);
the multilayer cast film is defined by at least one of the following properties:

a tensile ultimate elongation in the machine direction of less than 300%, as measured in accordance with ASTM D882;
a natural draw ratio (NDR) of less than 250%; wherein the natural draw ratio is measured as described in the description; or
a Highlight ultimate stretch of less than 300%, as measured in accordance with ASTM D4649; and

the multilayer cast film exhibits a machine direction tensile stress at second yield of at least 21.0 MPa for a film having a thickness of 10 microns or more in accordance with ASTM D882.

Additional features and advantages of the embodiments will be set forth in the detailed description which follows, and in part will be readily apparent to those skilled in the art from that description or recognized by practicing the embodiments described herein, including the detailed description which follows, the claims, as well as the appended drawings.

It is to be understood that both the foregoing and the following description describe various embodiments and are intended to provide an overview or framework for understanding the nature and character of the claimed subject matter. The accompanying drawings are included to provide a further understanding of the various embodiments, and are incorporated into and constitute a part of this specification. The drawings illustrate the various embodiments described herein, and together with the description serve to explain the principles and operations of the claimed subject matter.

## BRIEF DESCRIPTION OF THE DRAWINGS

FIG. 1 is a graph depicting the tensile stress (vertical axis) as a function of the stretch % (horizontal axis) for the films of Comparative Sample A and Sample 1;

FIG. 2 is a graph depicting the tensile stress (vertical axis) as a function of the stretch % (horizontal axis) for the films of Samples 2-5; and

FIG. 3 is a graph depicting the tensile stress (vertical axis) as a function of the stretch % (horizontal axis) for the films of Comparative Samples B and C and Samples 6 and 7.

## DETAILED DESCRIPTION

In multilayer cast films, include a cling layer, a release layer, and at least one core layer disposed between the cling layer and the release layer. According to the invention, at least one of the layers includes LDPE polymer having a density of 0.918 g/cc to 0.931 g/cc. Without being bound by theory, these multilayer films have improved strain hardening and yield strength while maintaining stretch.

As used herein, "polyethylene" means polymers comprising greater than 50% by weight of units which have been derived from ethylene monomer. This includes polyethylene homopolymers or copolymers (meaning units derived from two or more comonomers). Common forms of polyethylene known in the art include Low Density Polyethylene (LDPE); Linear Low Density Polyethylene (LLDPE); Ultra Low Density Polyethylene (ULDPE); Very Low Density Polyethylene (VLDPE); single site catalyzed Linear Low Density Polyethylene, including both linear and substantially linear low density resins (m-LLDPE); and High Density Polyethylene (HDPE). These polyethylene materials are generally known in the art; however the following descriptions may be helpful in understanding the differences between some of these different polyethylene resins.

The term "ULDPE" is defined as a polyethylene-based copolymer having a density in the range of 0.895 to 0.915 g/cc.

The term "LDPE" may also be referred to as "high pressure ethylene polymer" or "highly branched polyethylene" and is defined to mean that the polymer is partly or entirely homopolymerized or copolymerized in autoclave or tubular reactors at pressures above 14,500 psi (100 MPa) with the use of free-radical initiators, such as peroxides (see for example U.S. Pat. No. 4,599,392). LDPE resins typically have a density in the range of 0.916 to 0.940 g/cc.

The term "LLDPE", includes both resin made using the traditional Ziegler-Natta catalyst systems as well as single-site catalysts such as metallocenes (sometimes referred to as "m-LLDPE"). LLDPEs contain less long chain branching than LDPEs and include the substantially linear ethylene polymers which are further defined in U.S. Pat. No. 5,272,236, U.S. Pat. No. 5,278,272, U.S. Pat. No. 5,582,923 and U.S. Pat. No. 5,733,155; the homogeneously branched linear ethylene polymer compositions such as those in U.S. Pat. No. 3,645,992; the heterogeneously branched ethylene polymers such as those prepared according to the process disclosed in U.S. Pat. No. 4,076,698; and/or blends thereof (such as those disclosed in U.S. Pat. No. 3,914,342 or U.S. Pat. No. 5,854,045). The linear PE can be made via gas-phase, solution-phase or slurry polymerization or any combination thereof, using any type of reactor or reactor configuration known in the art, including but not limited to gas and solution phase reactors.

The term "HDPE" refers to polyethylenes having densities greater than about 0.940 g/cc, which are generally prepared with Ziegler-Natta catalysts, chrome catalysts or even metallocene catalysts.

As stated above, the multilayer films of the invention have at least three layers, including a cling layer, a release layer, and at least one core layer. Cling layers, for example, may enable the multilayer film to cling to itself when the film is wrapped on a load. The release layer does not have to have non-cling characteristics, but it does typically exhibit lower cling characteristics than the cling layer. For ease of handling, manufacture and recyclability, the polyethylene(s) that is used in the release layer may be the same or similar to the polyethylene(s) used in the cling layer and any core layers.

In the invention, the cling layer includes an ultra low density polyethylene (ULDPE), a propylene interpolymer, or a blend thereof. In embodiments, the cling layer includes a ULDPE. The ULDPE has a density of 0.895 g/cm$^3$ to 0.915 g/cm$^3$, or from 0.900 g/cm$^3$ to 0.910 g/cm$^3$, or from 0.902 g/cm$^3$ to 0.906 g/cm$^3$. Moreover, the ULDPE may has a melt index (I$_2$) of from 2 g/10 min to 10 g/10 min when measured according to ASTM D1238 at 190 °C and 2.16 kg load. In further embodiments, the I$_2$ may be from 2 g/10 min to 8 g/10 min, or from 2 g/10 min to 6 g/10 min. Commercially available ULDPEs suitable for use include, by way of example and not limitation, ULDPEs available under the tradename ATTANE™ from The Dow Chemical Company (Midland, MI).

In embodiments, the cling layer additionally or alternatively includes a propylene interpolymer. The propylene interpolymer includes at least 60 wt% units derived from propylene and between 1 and 40 wt% units derived from ethylene. For example, the propylene interpolymer may include from 60 wt% to 99 wt% units derived from propylene, from 65 wt% to 95 wt% units derived from propylene, from 70 wt% to 90 wt% units derived from propylene, from 75 wt% to 87 wt% units derived from propylene, or even from 80 wt% to 85 wt% units derived from propylene and from 1 wt% to 40 wt% units derived from ethylene, from 5 wt% to 35 wt% units derived from ethylene, from 10 wt% to 30 wt% units derived from ethylene, from 13 wt% to 25 wt% units derived from ethylene, or even from 15 wt% to 20 wt% units derived from ethylene. The propylene interpolymer has a density of from 0.840 g/cc and 0.900 g/cc, from 0.850 g/cc to 0.890 g/cc, or from 0.860 to 0.870 g/cc. The propylene interpolymer has a highest differential scanning calorimetry (DSC) melting peak temperature of from 50.0 °C to 120.0 °C, from 100.0 °C to 117.0 °C, or even from 105.0 °C to 115 °C. The propylene interpolymer has a melt flow rate, MFR$_2$, of from 1 g/10 min to 100 g/10 min when measured according to ASTM D1238 at 230 °C and 2.16 kg load. For example, the propylene interpolymer may have a melt flow rate, MFR$_2$, of from 1 g/10 min to 100 g/10 min, from 1.25 g/10 min to 50 g/10 min, from 1.5 g/10 min to 25 g/10 min, from 1.75 g/10 min to 20 g/10 min, from 2 g/10 min to 10 g/10 min, or from 2.5 g/10 min to 5 g/10 min. Furthermore the propylene interpolymer has a molecular weight distribution (MWD), M$_w$/M$_n$, of less than 4.0. For example, the propylene interpolymer may have an MWD of from 1 to 4, from 1.5 to 3.9, or from 2 to 3.8. Various commercial propylene interpolymers are considered suitable, for example, VISTAMAXX™ from the Exxon Mobil Chemical Company.

Although in one or more embodiments the cling layer may include a ULDPE or a propylene interpolymer, it is contemplated that in some embodiments, the cling layer may include a blend of a ULDPE and a propylene interpolymer. In further embodiments, additional polymers may be added to the cling layer, such as LDPEs, LLDPEs, and the like. Accordingly, in one embodiment, the cling layer includes from 3 wt% of ULDPE, propylene interpolymer, or both. In a further embodiment, the cling layer includes from 20 wt% of ULDPE, propylene interpolymer, or both. In yet another embodiment, the cling layer includes from 20 wt% to 40 wt% of ULDPE, propylene interpolymer, or both. By way of example and not limitation, in some embodiments, the cling layer includes about 30% ULDPE, propylene interpolymer, or both and about 70% LLDPE..

In some embodiments, the cling layer may include up to about 20 wt% LDPE polymer (sometimes referred to herein as LDPE resin), from 4 wt% to 15 wt% LDPE polymer, or, in some embodiments, from 4 wt% to 10 wt% LDPE polymer.

As will be described in greater detail below, the LDPE polymer may be included in other layers in addition to or as an alternative to inclusion in the cling layer. In various embodiments, any layer including LDPE may include from greater than 0 wt% to 20 wt% LDPE, from greater than 0 wt% to 15 wt% LDPE, from 0.01 wt% to 15 wt% LDPE, or from 0.5 wt% to 15 wt% LDPE. In other words, each layer in the multilayer film includes a maximum of 15 wt% or even 20 wt% LDPE, but may alternatively be free of LDPE. In the invention, the multilayer film includes from about 3 wt% to about 7 wt% LDPE based on a total weight of the multilayer film.

The LDPE has a density of from 0.915 g/cc to 0.931 g/cc, from 0.915 g/cc to 0.925 g/cc, or even from 0.918 g/cc to 0.924 g/cc. In some embodiments, the LDPE has a density of from 0.918 g/cc to 0.931 g/cc. The LDPE has a melt index ($I_2$) ranging from 0.15 g/10 min to 6 g/10 min, from 0.15 g/10 min to 4 g/10 min, from 0.2 g/10 min to 6 g/10 min, from 0.2 g/10 min to 5 g/10 min, from 0.2 g/10 min to 2 g/10 min, from 0.2 g/10 min to 1 g/10 min, or from 0.75 g/10 min to 2 g/10 min when measured according to ASTM D1238 at 190 °C and 2.16 kg load. The LDPE may further be characterized by molecular weight distribution (MWD). For example, in various embodiments, the LDPE has an MWD from 3.5 to 10, from 4 to 10, or from 5 to 9. As used herein, the MWD is defined as $M_w/M_n$, where $M_w$ is a weight average molecular weight and $M_n$ is a number average molecular weight.

The LDPEs may be well-known, commercially available LDPEs, and may be made by any one of a variety of processes, such as those described above. Commercially available LDPEs include but are not limited to LDPEs available under the tradenames AGILITY™ and DOW™, including but not limited to DOW™ LDPE 310E, from The Dow Chemical Company (Midland, MI).

In some embodiments, the cling layer may further include one or more LLDPEs. Suitable LLDPEs may include, for example, one or more of the LLDPEs described hereinbelow. For example, in some embodiments, the cling layer includes an LLDPE having a density of from 0.905 to 0.930 g/cc and a melt index ($I_2$) of from 0.5 g/10 min to 10 g/10 min when measured according to ASTM D1238 at 190 °C and 2.16 kg load. The LLDPE may further be characterized by a MWD of from 3.5 to 5.0, or from 3.5 to 4.5, as measured by GPC. In various embodiments, the LLDPE may further be characterized by a comonomer distribution breadth index (CDBI) of less than 70%. As used herein, CDBI is defined as the weight percent of the polymer molecules having a comonomer content within 50 percent of the median total molar comonomer content. It represents a comparison of the comonomer distribution in the polymer to the comonomer distribution expected for a Bernoullian distribution.

In embodiments, the LLDPE of the core layer is an ethylene/$C_4$-$C_{20}$ alpha-olefin interpolymer, or in further embodiments, an ethylene/$C_5$-$C_{20}$ alpha-olefin interpolymer, an ethylene/$C_4$-$C_8$ alpha-olefin interpolymer ($C_4$-$C_8$-LLDPE), or an ethylene/$C_6$-$C_{12}$ interpolymer ($C_6$-$C_{12}$-LLDPE). The term "interpolymer" is used herein to indicate a copolymer, or a terpolymer, or the like. That is, at least one other comonomer is polymerized with ethylene to make the interpolymer. For example, in some embodiments, the LLDPE may be an ethylene/$C_5$ terpolymer, while in other embodiments, the LLDPE may be an ethylene/$C_4$-$C_{20}$ copolymer.

The ethylene/$C_5$-$C_{20}$ alpha-olefin interpolymer may have a density of from 0.915 g/cc to 0.925 g/cc, from 0.916 g/cc to 0.920 g/cc, or from 0.917 to 0.919 g/cc. In various embodiments, the ethylene/$C_5$-$C_{20}$ alpha-olefin interpolymer has a melt index ($I_2$) ranging from 0.25 g/10 min to 10 g/10 min, from 0.5 g/10 min to 5 g/10 min, or from 0.75 g/10 min to 4 g/10 min when measured according to ASTM D1238 at 190 °C and 2.16 kg load.

The $C_6$-$C_{12}$-LLDPE may be a copolymer including ethylene and at least one $C_6$-$C_{12}$ $\alpha$-olefin comonomer. The $C_6$-$C_{12}$ $\alpha$-olefin comonomer may be, for example, 1-hexene, 1-octene, or the like. Accordingly, in some embodiments, the $C_6$-$C_{12}$-LLDPE may be, by way of example and not limitation, hexene-LLDPE ($C_6$-LLDPE) or octene-LLDPE ($C_8$-LLDPE). The $C_6$-$C_{12}$-LLDPE may be a well-known, commercially available $C_6$-$C_{12}$-LLDPE, and may be made by any one of a wide variety of processes including, but not limited to, solution, gas or slurry phase processes. Additionally, such processes may be Ziegler-Natta catalyzed or constrained geometry catalyzed, or the like. In some embodiments, the $C_6$-$C_{12}$-LLDPE is a Ziegler-Natta catalyzed resin. Commercially available $C_6$-$C_{12}$-LLDPEs include but are not limited to $C_6$-$C_{12}$-LLDPEs available under the tradenames DOWLEX™ (including, but not limited to, DOWLEX™ 2645G) and ATTANE™ (including, but not limited to, ATTANE™ 4607GC and ATTANE™ 4404G) from The Dow Chemical Company (Midland, MI). Other commercially available $C_6$-$C_{12}$-LLDPEs include those available under the tradenames ENABLE™ (including, but not limited to, ENABLE™ 2010) and EXCEED™ (including, but not limited to, EXCEED™ 3518) from the Exxon Mobil Chemical Company.

The $C_6$-$C_{12}$-LLDPE may have a density of from 0.900 to 0.940 g/cc, from 0.916 g/cc to 0.920 g/cc, or from 0.915 to 0.925 g/cc. In various embodiments, the $C_6$-$C_{12}$-LLDPE has a melt index ($I_2$) ranging from 0.25 g/10 min to 10 g/10 min, from 0.5 g/10 min to 2 g/10 min, from 0.8 g/10 min to 4.5 g/10 min, or even from 1 g/10 min to 3 g/10 min.

The $C_4$-$C_8$-LLDPEs may have a density of from 0.900 g/cc to 0.940 g/cc, from 0.916 g/cc to 0.920 g/cc, or from 0.915 to 0.925 g/cc. The $C_4$-$C_8$-LLDPEs may include well-known, commercially available $C_4$-$C_8$-LLDPEs, and may be made by any one of a wide variety of processes including, but not limited to, solution, gas or solution, gas or slurry phase processes. Additionally, such processes may be Ziegler-Natta catalyzed or constrained geometry catalyzed, or the like. In some embodiments, the $C_4$-$C_8$-LLDPE is a Ziegler-Natta catalyzed resin. In various embodiments, the $C_4$-$C_8$-LLDPEs or butene-LLDPE has a melt index ($I_2$) ranging from 0.5 g/10 min to 4 g/10 min or from 1 g/10 min to 2 g/10 min when measured according to ASTM D1238 at 190 °C and 2.16 kg load.

The $C_4$-$C_8$-LLDPEs may include butene-LLDPEs. These may include well-known, commercially available butene-LLDPEs made by any one of a wide variety of processes including, but not limited to, solution, gas or slurry phase, Ziegler-Natta or constrained geometry catalyzed, or the like. Commercially available butene-LLDPEs include but are not limited to butene-LLDPEs available under the tradenames CEFOR™, for example, CEFOR™ 1221P and CEFOR™ 1211P from The Dow Chemical Company (Midland, MI), or SABIC® LLDPE 218B from Saudi Arabia Basic Industries Corporation (Saudi Arabia).

In the invention, the cling layer includes from 50 wt% to 95 wt% butene-LLDPE, or from 50 wt% to 90 wt% butene-LLDPE, or from 50 wt% to 80 wt% butene-LLDPE, or from 60 wt% to 80 wt% butene-LLDPE. Various amounts are contemplated for the LLDPEs in the release layer. For example, the release layer may include from 10 wt% to 100 wt% LLDPE, or from 20 wt% to 90 wt% LLDPE.

As stated above, the multilayer film further includes a release layer. In various embodiments, the release layer includes at least one LLDPE, for example, butene-LLDPE, hexene-LLDPE, or combinations thereof.

In some embodiments, the release layer may further include at least one LDPE polymer. The LDPE polymer may, for example, be any of the LDPE polymers described above. In embodiments, the release layer may include up to about 20 wt% LDPE polymer, from 3 wt% to 20 wt% LDPE polymer, or, in some embodiments, from 3 wt% to 10 wt% LDPE polymer. That said, the LDPE polymer is only present from 3 wt% to 7 wt% based on a total amount of polymers of the multilayer film.

Furthermore, the multilayer film further includes at least one core layer disposed between the cling layer and the release layer. In various embodiments, at least one core layer may be in contact with the cling layer and/or the release layer. In other embodiments, additional layers may be disposed between the cling layer and the core layer and/or between the release layer and the core layer. Each core layer of the multilayer film includes at least one LLDPE. In various embodiments, the core layer(s) may be used to provide strain hardening. Strain hardening occurs when areas of material which have already been strained become stiffer, transferring subsequent elongation into areas which are unstrained. Although in various embodiments, a single core layer will be discussed and described, it is contemplated that in some embodiments, multiple core layers may be employed.

Various LLDPEs may be included in the core layer, including but not limited to the LLDPEs described above. In the invention, the core layer comprises a LLDPE having a density of from 0.905 to 0.930 g/cc and a melt index ($I_2$) of from 0.5 g/10 min to 10 g/10 min when measured according to ASTM D1238 at 190 °C and 2.16 kg load.

In some embodiments, the core layer includes an LLDPE that is the same as an LLDPE included in the release layer, while in other embodiments, the LLDPE of the core layer is different from the LLDPE included in the release layer. Moreover, the LLDPE of the core layer may be the same as or different from an LLDPE included in the cling layer. In some embodiments, each of the cling layer, the release layer, and the core layer includes a different LLDPE, while in other embodiments, two or more layers may include the same LLDPE. In other words, in some embodiments, two or more LLDPEs in the cling layer, the release layer, and the core layer may be different from each other. By "a different LLDPE," it is meant that the LLDPEs may differ in density, melt index, catalyst, process, or some other aspect. In some embodiments, one or more core layers may include one or more butene-LLDPEs, such as those described above. For example, in one embodiment, the multilayer film includes three core layers: two outer core layers and an inner core layer. In this embodiment, the inner core layer may include a butene-LLDPE and each of the outer core layers may include an ethylene/$C_5$-$C_{20}$ alpha-olefin interpolymer.

In further embodiments, the core layer may be made from a solution including an LDPE and a $C_6$-$C_{12}$ comonomer LLDPE copolymer ($C_6$-$C_{12}$-LLDPE) blend. In some embodiments, the core layer may be made from a solution including an LDPE and a $C_6$-$C_8$-LLDPE blend. Accordingly, in some embodiments, the $C_6$-$C_{12}$-LLDPE may be, by way of example and not limitation, hexene-LLDPE ($C_6$-LLDPE) or octene-LLDPE ($C_8$-LLDPE).

In some embodiments, the core layer may further include at least one LDPE polymer. The LDPE polymer may, for example, be any of the LDPE polymers described hereinabove. In embodiments, the core layer may include up to about 20 wt% LDPE polymer, from 3 wt% to 20 wt% LDPE polymer, or, in some embodiments, from 3 wt% to 10 wt% LDPE polymer based on a total amount of polymers present in the core layer. In some embodiments in which the multilayer film includes two or more core layers, at least one of the core layers includes from 3 wt% to 20 wt% LDPE polymer, or, in some embodiments, from 3 wt% to 10 wt% LDPE polymer based on a total amount of polymers present in that core layer. Reiterating the proviso above, the LDPE polymer is present in from 3 wt% to 7 wt% based on a total amount of polymers of the multilayer film.

In embodiments, at least one LLDPE may be an ethylene-butene copolymer and another LLDPE in the multilayer film may be an ethylene/$C_5$-$C_{20}$ alpha-olefin interpolymer. For example, the multilayer film may include a cling layer including at least ULDPE, a release layer including an ethylene-butene copolymer, and at least one core layer including an ethylene/$C_5$-$C_{20}$ alpha-olefin interpolymer. As one example, the multilayer film may include a cling layer including at least ULDPE and an ethylene-butene copolymer, a release layer including an LLDPE, and at least one core layer including an ethylene/$C_5$-$C_{20}$ alpha-olefin interpolymer. Other combinations are also contemplated.

The multilayer film of various embodiments may be constructed from two or more film layers by any film lamination and/or coextrusion technique and using any cast film extrusion and lamination equipment known in the art. For example, multilayer film structures may be prepared using coextrusion techniques, such as, by cast coextrusion techniques.

The multilayer film may have a thickness of from 5 μm to 15 μm, from 6 μm to 13 μm, from 6 μm to 12 μm, from 6 μm to 9 μm, from 8 μm to 15 μm, or from 10 μm to 15 μm. In various embodiments, the core layer has a thickness of from 30% to 70% based on a total thickness of the multilayer film. In some embodiments, the core layer has a thickness of from 40% to 60% based on the total thickness of the multilayer film. In other embodiments, the core layer has a thickness of from 50% to 70% based on the total thickness of the multilayer film. In still other embodiments, the core layer has a thickness of from about 50% to about 90% of the total thickness of the film.

One or more layers of the multilayer film may further comprise one or more additives. Such additives include, but are not limited to, dyes, lubricants, fillers, pigments, antioxidants, processing aids, UV stabilizers, release agents, anti-blocking agents, and combinations thereof. The multilayer films may contain any amounts of such additives, such as from 0 wt% to 10 wt% based on a weight of the layer.

Without being bound by theory, the tunable strain hardening properties may be characterized by one or more of the properties detailed below.

The multilayer films of various embodiments herein may have a tensile ultimate elongation in the machine direction of less than 350%, less than 325%, less than 300% or even less than 250% when measured in accordance with ASTM D882.

The multilayer films described herein typically exhibit a machine direction ("MD") tensile strength of at least 20 MPa, as measured in accordance with ASTM D882. In some embodiments, the machine direction tensile strength of the multilayer film is from about 35 to 80 MPa, from 40 to 75 MPa, or from 42 to 72 MPa.

Moreover, the multilayer films described herein may exhibit a natural draw ratio (NDR) of less than about 250%. As used herein, the NDR is determined from a stress-elongation measurement of ASTM D882, as the elongation at the intersection of a line drawn through a linear portion of the strain hardening region and a line drawn through a linear portion of the yield plateau region. The lines are calculated as linear regression fits to the data in the linear portions of the curves. The specific range of data points subjected to the linear regression analysis can be chosen by changing the lower elongation limit in steps of, for example, 5%, keeping the overall range constant at, for example, 50% (e.g., 50-100%, 55-105%, 60-110%, etc.), and determining the range which gives the lowest sum of squared differences between predicted and actual data. Additional details on calculating the NDR may be found in U.S. Patent No. 7,601,409.

In various embodiments, the multilayer film exhibits a machine direction tensile stress at second yield of greater than 19.0 MPa, or greater than 21.0 MPa for a film having a thickness of 10 microns or more in accordance with ASTM D882. In various embodiments, the multilayer film has at least one of the following properties: a tensile ultimate elongation in the machine direction of less than 300% as measured in accordance with ASTM D882, a NDR of less than 250%, or a Highlight ultimate stretch of less than 300% as measured in accordance with ASTM D4649.

In practice, the multilayer film may be wrapped around an article, including but not limited to food, or a group of articles to form a unitized package. The unitized package may be at least partially held together by the retaining force applied by the multilayer film, which is stretched during the wrapping. Wrapping may be performed by positioning the article or group of articles on a platform or turntable, which is rotated to take up the multilayer film from a continuous roll. Braking tension may be applied to the multilayer film roll to subject the multilayer film to continuous tensioning or stretching force. Alternatively, an operator may hand hold the roll of multilayer film and walk around the article or group of articles to be wrapped, applying the multilayer film to the article or group of articles.

*Test Methods*

Unless otherwise specified, test methods were performed as follows:

Density is measured in accordance with ASTM D 792, and is reported in grams per cubic centimeter (g/cc or g/cm$^3$).

Melt Index (I$_2$) is measured in accordance with ASTM D 1238 at 190 °C and a 2.16 kg load, and is reported in grams eluted per 10 minutes.

Melt Flow Rate, MFR2, for propylene-based polymers is measured in accordance with ASTM D 1238-10, Condition 230 °C/2.16 kg, and is reported in grams eluted per 10 minutes.

Gel Permeation Chromatography (GPC)

*Propylene Interpolymers*

The chromatographic system consisted of a PolymerChar GPC-IR (Valencia, Spain) high temperature GPC chromatograph, equipped with an internal IR5 infra-red detector (IR5) coupled to a Precision Detectors (Now Agilent Technologies) 2-angle laser light scattering (LS) detector Model 2040, and followed by a PolymerChar 4-capillary viscosity detector (three detectors in series). For all light scattering measurements, the 15 degree angle was used for measurement purposes. The autosampler oven compartment was set at 160° Celsius, and the column compartment was set at 150° Celsius. The columns used were four, Agilent "Mixed A" columns, each 30 cm, and each packed with 20-micron linear mixed-bed particles. The chromatographic solvent used was 1,2,4-trichlorobenzene, which contained 200 ppm of butylated hydroxytoluene (BHT). The solvent source was nitrogen sparged. The injection volume was 200 microliters, and the flow rate was 1.0 milliliters/minute.

Calibration of the GPC column set was performed with 21 narrow molecular weight distribution, polystyrene standards with molecular weights ranging from 580 to 8,400,000 g/mol. These standards were arranged in 6 "cocktail" mixtures, with at least a decade of separation between individual molecular weights. The standards were purchased from Agilent Technologies. The polystyrene standards were prepared at "0.025 grams in 50 milliliters of solvent" for molecular weights equal to, or greater than, 1,000,000, g/mol, and at "0.05 grams in 50 milliliters of solvent" for molecular weights less than 1,000,000 g/mol. The polystyrene standards were dissolved at 80 °C, with gentle agitation, for 30 minutes.

The equivalent polypropylene molecular weights are determined by using appropriate Mark-Houwink coefficients for polypropylene (as described by Th.G. Scholte, N.L.J. Meijerink, H.M. Schoffeleers, and A.M.G. Brands, J. Appl. Polym. Sci., 29, 3763 - 3782 (1984), and polystyrene (as described by E. P. Otocka, R. J. Roe, N. Y. Hellman, P. M. Muglia, Macromolecules, 4, 507 (1971) in the Mark-Houwink equation (EQ 1), which relates intrinsic viscosity to molecular weight. The instantaneous molecular weight ($M_{(PP)}$) at each chromatographic point is determined by EQ 2, using universal calibration and the Mark-Houwink coefficients as defined in EQ 1. The number-average, weight-average, and z-average molecular weight moments, Mn, Mw, and Mz are calculated according to EQ 3, EQ 4, and EQ 5, respectively, wherein IR is the baseline-subtracted infra-red measurement signal height of the polymer elution peak at each chromatographic point (i).

$$\{\eta\} = KM^a \qquad\qquad (EQ\ 1)$$

where $K_{pp} = 1.90E\text{-}04$ , $a_{pp} = 0.725$ and $K_{ps} = 1.26E\text{-}04$, $a_{ps} = 0.702$

A 3$^{rd}$-order polynomial was used to fit the polystyrene calibration points.

$$M_{(PP)} = \left( \frac{K_{PS} M_{PS}{}^{a_{PS}+1}}{K_{PP}} \right)^{\frac{1}{a_{PP}+1}} \qquad\qquad (EQ\ 2)$$

$$Mn_{(GPC)} = \frac{\sum^{i} IR_i}{\sum^{i} \left( IR_i \Big/ M_{(PP)_i} \right)} \qquad\qquad (EQ\ 3)$$

$$Mw_{(GPC)} = \frac{\sum^{i} \left( IR_i * M_{(PP)_i} \right)}{\sum^{i} IR_i} \qquad\qquad (EQ\ 4)$$

$$Mz_{(GPC)} = \frac{\sum^{i}\left(IR_i * M_{(PP)_i}^{\,2}\right)}{\sum^{i}\left(IR_i * M_{(PP)_i}\right)} \qquad (EQ\ 5)$$

_LLDPE and LDPE Polymers_

For the LLPDE and LDPE samples, the polystyrene standard peak molecular weights (IR 5 detector) were converted to polyethylene molecular weights using EQ 6 (as described in Williams and Ward, J. Polym. Sci., Polym. Let., 6, 621 (1968))

$$M_{(PE)} = A\left(M_{PS}\right)^{B} \quad where\ A = 0.4315\ and\ B = 1 \qquad (EQ\ 6)$$

A third order polynomial was used to fit the respective polyethylene-equivalent calibration points. A small adjustment to A (from approximately 0.415 to 0.44) was made to correct for column resolution and band-broadening effects, such that NIST standard NBS 1475 was obtained at 52,000 g/mol (Mw). The number-average, weight-average, and z-average molecular weight moments, Mn, Mw, and Mz are calculated according to EQ 7, EQ 8, and EQ 9, respectively, wherein IR is the baseline-subtracted infra-red measurement signal height of the polymer elution peak at each chromatographic point (i).

$$Mn_{(GPC)} = \frac{\sum^{i} IR_i}{\sum^{i}\left(IR_i \Big/ M_{(PE)_i}\right)} \qquad (EQ\ 7)$$

$$Mw_{(GPC)} = \frac{\sum^{i}\left(IR_i * M_{(PE)_i}\right)}{\sum^{i} IR_i} \qquad (EQ\ 8)$$

$$Mz_{(GPC)} = \frac{\sum^{i}\left(IR_i * M_{(PE)_i}^{\,2}\right)}{\sum^{i}\left(IR_i * M_{(PE)_i}\right)} \qquad (EQ\ 9)$$

Crystallization Elution Fractionation (CEF) Method

The Crystallization Elution Fractionation (CEF) technology is conducted according to Monrabal et al, Macromol. Symp. 257, 71-79 (2007). The CEF instrument is equipped with an IR-4 or IR-5 detector (such as that sold commercially from PolymerChar, Spain) and a two angle light scattering detector Model 2040 (such as those sold commercially from Precision Detectors). A 10 micron guard column of 50 mm x 4.6 mm (such as that sold commercially from PolymerLabs) is installed before the IR-4 or IR-5 detector in the detector oven. Ortho-dichlorobenzene (ODCB, 99% anhydrous grade) and 2,5-di-tert-butyl-4-methylphenol (BHT) (such as commercially available from Sigma-Aldrich) are obtained. Silica gel 40 (particle size 0.2-0.5 mm) (such as commercially available from EMD Chemicals) is also obtained. The silica gel is dried in a vacuum oven at 160 °C for at least two hours before use. ODCB is sparged with dried nitrogen (N2) for one hour before use. Dried nitrogen is obtained by passing nitrogen at <90 psig over $CaCO_3$ and 5Å molecular sieves. ODCB is further dried by adding five grams of the dried silica to two liters of ODCB or by pumping through a column or columns packed with dried silica between 0.1 ml/min to 1.0 ml/min. Eight hundred milligrams of BHT are added to two liters of ODCB if no inert gas such as N2 is used in purging the sample vial. Dried ODCB with or without BHT is hereinafter referred to as "ODCB-m." A sample solution is prepared by, using the autosampler, dissolving a polymer sample in ODCB-m at 4 mg/ml under shaking at 160 °C for 2 hours. 300 $\mu$L of the sample solution is injected into the column. The temperature profile of CEF is: crystallization at 3 °C/min from 110 °C to 30 °C, thermal equilibrium at 30 °C for 5 minutes (including Soluble Fraction Elution Time being set as 2 minutes), and elution at 3 °C/min from 30 °C to 140 °C. The flow rate during crystallization is 0.052 ml/min. The flow rate during elution is 0.50 ml/min. The IR-4 or IR-5 signal data is collected at one data point/second.

The CEF column is packed with glass beads at 125 $\mu$m $\pm$ 6% (such as those commercially available with acid wash from MO-SCI Specialty Products) with 1/8 inch stainless tubing according to U.S. 8,372,931. The internal liquid volume of the CEF column is between 2.1 ml and 2.3 ml. Temperature calibration is performed by using a mixture of NIST Standard Reference Material linear polyethylene 1475a (1.0 mg/ml) and Eicosane (2 mg/ml) in ODCB-m. The calibration consists of four steps: (1) calculating the delay volume defined as the temperature offset between the measured peak elution temperature of Eicosane minus 30.00 °C; (2) subtracting the temperature offset of the elution temperature from the CEF raw temperature data. It is noted that this temperature offset is a function of experimental conditions, such as elution temperature, elution flow rate, etc.; (3) creating a linear calibration line transforming the elution temperature across a range of 30.00 °C and 140.00 °C such that NIST linear polyethylene 1475a has a peak temperature at 101.00 °C, and Eicosane has a peak temperature of 30.00 °C, (4) for the soluble fraction measured isothermally at 30 °C, the elution temperature is extrapolated linearly by using the elution heating rate of 3 °C/min. The reported elution peak temperatures are obtained such that the observed comonomer content calibration curve agrees with those previously reported in U.S. Patent No. 8,372,931.

Comonomer Distribution Breadth Index (CDBI)

The CDBI is calculated using the methodology described in WO/93/03093, from data obtained from CEF. CDBI is defined as the weight percent of the polymer molecules having a comonomer content within 50 percent of the median total molar comonomer content. It represents a comparison of the comonomer distribution in the polymer to the comonomer distribution expected for a Bernoullian distribution.

CEF is used to measure the short chain branching distribution (SCBD) of the polyolefin. A CEF molar comonomer content calibration is performed using 24 reference materials (e.g., polyethylene octene random copolymer and ethylene butene copolymer) with a narrow SCBD having a comonomer mole fraction ranging from 0 to 0.108 and a Mw from 28,400 to 174,000 g/mole. The ln (mole fraction of ethylene), which is the ln (comonomer mole fraction), versus 1/T (K) is obtained, where T is the elution temperature in Kelvin of each reference material. The comonomer distribution of the reference materials is determined using 13C NMR analysis in accordance with techniques described, for example, in U.S. Patent No. 5,292,845 (Kawasaki, et al.) and by J. C. Randall in Rev. Macromol. Chem. Phys., C29, 201-317.

Differential Scanning Calorimetry (DSC)

DSC is used to measure the melting and crystallization behavior of a polymer over a wide range of temperatures. For example, the TA Instruments Q1000 DSC, equipped with an RCS (refrigerated cooling system) and an autosampler is used to perform this analysis. The instrument is first calibrated using the software calibration wizard. A baseline is obtained by heating a cell from -80 °C to 280 °C without any sample in an aluminum DSC pan. Sapphire standards are then used as instructed by the calibration wizard. Next, 1 to 2 milligrams (mg) of a fresh indium sample are analyzed by heating the standards sample to 180 °C, cooling to 120 °C at a cooling rate of 10 °C/minute, and then keeping the standards sample isothermally at 120 °C for 1 minute. The standards sample is then heated from 120 °C to 180 °C at a heating rate of 10 °C/minute. Then, it is determined that indium standards sample has heat of fusion ($H_f$) = 28.71 $\pm$ 0.50 Joules per gram (J/g) and onset of melting = 156.6 °C $\pm$ 0.5 °C. Test samples are then analyzed on the DSC instrument.

During testing, a nitrogen purge gas flow of 50 ml/min is used. Each sample is melt pressed into a thin film at about 175 °C; the melted sample is then air-cooled to room temperature (approx. 25 °C). The film sample is formed by pressing a "0.1 to 0.2 gram" sample at 175 °C at 1,500 psi, and 30 seconds, to form a "0.1 to 0.2 mil thick" film. A 3-10 mg, 6 mm diameter specimen is extracted from the cooled polymer, weighed, placed in a light aluminum pan (ca 50 mg), and crimped shut. Analysis is then performed to determine its thermal properties.

The thermal behavior of the sample is determined by ramping the sample temperature up and down to create a heat flow versus temperature profile. First, the sample is rapidly heated to 180 °C, and held isothermal for five minutes, in order to remove its thermal history. Next, the sample is cooled to -40 °C, at a 10 °C/minute cooling rate, and held isothermal at -40 °C for five minutes. The sample is then heated to 150 °C (this is the "second heat" ramp) at a 10 °C/minute heating rate. The cooling and second heating curves are recorded. The cool curve is analyzed by setting baseline endpoints from the beginning of crystallization to -20 °C. The heat curve is analyzed by setting baseline endpoints from -20 °C to the end of melt. The values determined are peak melting temperature ($T_m$), peak crystallization temperature ($T_c$), onset crystallization temperature (Tc onset), heat of fusion ($H_f$) (in Joules per gram), and the calculated % crystallinity for polyethylene samples using: % Crystallinity for PE = ((Hf)/(292 J/g)) x 100, and the calculated % crystallinity for polypropylene samples using: % Crystallinity for PP = ((Hf)/165 J/g)) x 100. The heat of fusion ($H_f$) and the peak melting temperature are reported from the second heat curve. Peak crystallization temperature and onset crystallization temperature are determined from the cooling curve.

13C-NMR

*Sample Preparation*

The samples are prepared by adding approximately 2.7 g of a 50/50 mixture of tetrachloroethane-d2/orthodichlorobenzene containing 0.025 M Cr(AcAc)3 to 0.25 g sample in a Norell 1001-7 10 mm NMR tube. The samples are dissolved and homogenized by heating the tube and its contents to 150 °C using a heating block and vortex mixer. Each sample is visually inspected to ensure homogeneity.

*Data Acquisition Parameters*

The data is collected using a Bruker 400 MHz spectrometer equipped with a Bruker Dual DUL high-temperature CryoProbe. The data is acquired using 320 transients per data file, a 6 sec pulse repetition delay, 90 degree flip angles, and inverse gated decoupling with a sample temperature of 120 °C. All measurements are made on non-spinning samples in locked mode. Samples are allowed to thermally equilibrate for 7 minutes prior to data acquisition. The $^{13}$C NMR chemical shifts are internally referenced to the mmmm pentad at 21.90 ppm or the EEE triad at 30.0 ppm.

*Data Analysis*

Composition is determined using the assignments from S. Di Martino and M. Keclchtermans, "Determination of the Composition of Ethylene-Propylene-Rubbers Using 13C-NMR Spectroscopy," Journal of Applied Polymer Science, Vol. 56, 1781-1787 (1995), and integrated C13 NMR spectra to solve the vector equation *s=fM* where *M* is an assignment matrix, s is a row vector representation of the spectrum, and *f* is a mole fraction composition vector. The elements of *f* are taken to be triads of E and O with all permutations of E and O. The assignment matrix *M* is created with one row for each triad in *f* and a column for each of the integrated NMR signals. The elements of the matrix are integral values determined by reference to the assignments in Ref. 1. The equation is solved by variation of the elements of *f* as needed to minimize the error function between s and the integrated C13 data for each sample. This is easily executed in Microsoft Excel using the Solver function.

Elmendorf Tear is measured in machine direction (MD) and transverse direction (TD) in accordance with ASTM D1922.

Tensile strength values (at yield, at 2$^{nd}$ yield, at break, elongation at break, energy to break, and stress) are measured in the machine direction (MD) with a ZWICK model Z010 with TestXpertII software according to ASTM D882. Tensile Yield Strength (or yield point) is defined as the first inflection points or local maximum at the lowest strain (elongation) in a stress-strain curve from ASTM D882. Tensile 2$^{nd}$ Yield Strength is defined as the second inflection point or second local maximum at higher strain than the yield point, which resides typically between strain at yield point and start of yield plateau region (typically less than 100% strain) from ASTM D882.

Dart Impact Strength (sometimes termed "dart drop") is measured according to ASTM D1709 Method A, at 26 inches $\pm$ 0.4 inches (66 cm $\pm$ 1 cm) height and polished aluminum hemispherical head of 38.10 $\pm$ 0.13 mm in diameter.

Puncture resistance is measured on a ZWICK model Z010 with TestXpertII software. The specimen size is 6" x 6" and at least 5 measurements are made to determine an average puncture value. A 1000 Newton load cell is used with a round specimen holder. The specimen is a 4 inch diameter circular specimen. The Puncture resistance procedures follow ASTM D5748-95 standard, with modification to the probe described here. The puncture probe is a ½ inch diameter ball shaped polished stainless steel probe. There is no gauge length; the probe is as close as possible to, but not touching, the specimen. The probe is set by raising the probe until it touched the specimen. Then the probe is gradually lowered, until it is not touching the specimen. Then the crosshead is set at zero. Considering the maximum travel distance, the distance would be approximately 0.10 inch. The crosshead speed used is 250 mm/minute. The thickness is measured in the middle of the specimen. The thickness of the film, the distance the crosshead traveled, and the peak load are used to determine the puncture by the software. The puncture probe is cleaned after each specimen. The puncture force at break is the maximum peak load at break (in Newtons) and the puncture energy is the area under the curve of the load/elongation curve (in Joules).

Highlight values (ultimate stretch and stretch force) were measured on a Highlight Film test stand, Highlight Industries Inc. (Michigan, USA). The Highlight measurements follow ASTM D4649 standard. A film supply roll is placed on the film mandrel, where film is unwound and threaded through two pre-stretching rubber rollers, and finally collected at the take-up mandrel. The test selector switch was positioned to "Ultimate/Quality", and the "Light" setting was selected for thin gauge films. The Highlight ultimate stretch was conducted using the Film Ultimate Test feature on the test software, which starts at a minimal stretch percentage and progressively increases the film stretch to the film's ultimate stretch level. The test speed is 56 meters/minute, and at least 2 measurements are made to determine the average ultimate stretch. The Highlight stretch force is measured using the force transducer located between the pre-stretching rubber rollers, recorded periodically throughout the experiment.

*Examples*

The following examples are provided to illustrate various embodiments, but are not intended to limit the scope of the claims. All parts and percentages are by weight unless otherwise indicated. Further, a description of the raw materials used in the examples is as follows:

DOWLEX™ 2645G is a $C_6$-LLDPE copolymer having a melt index ($I_2$) of 0.85 g/10 min and a density of 0.918 g/cc, available from The Dow Chemical Company (Midland, MI);

DOWLEX™ 2607G is a $C_6$-LLDPE copolymer having a melt index ($I_2$) of 2.3 g/10 min, a density of 0.918 g/cc, available from The Dow Chemical Company (Midland, MI);

LOTRENE™ FE8000 LDPE is an LDPE having a melt index ($I_2$) of 0.8 g/10 min and a density of 0.923 g/cc as measured in accordance with ASTM D1505, available from Qatar Petrochemical Company Ltd. (Qatar);

VISTAMAXX™ 6102 is a propylene interpolymer including 16.0 wt% ethylene and having a melt flow rate ($MFR_2$) of 3 g/ 10 min, a $T_m$ of 105.54 °C (measured using DSC), and a density of 0.862 g/cc as measured in accordance with ASTM D1505, available from the Exxon Mobil Chemical Company (Spring, TX);

DOW™ LDPE 310E is an LDPE having a melt index ($I_2$) of 0.75 g/10 min and a density of 0.923 g/cc, available from The Dow Chemical Company (Midland, MI);

DOW™ Butene 1221G1 is a butene-LLDPE having a melt index ($I_2$) of 2.0 g/10 min and a density of 0.918 g/cc, available from The Dow Chemical Company (Midland, MI);

DOW™ Butene 1211G1 is a butene-LLDPE having a melt index ($I_2$) of 1.0 g/10 min and a density of 0.918 g/cc, available from The Dow Chemical Company (Midland, MI);

SABIC® LLDPE 218B is a butene-LLDPE copolymer, having a melt index ($I_2$) of 2.0 g/10 min, a density of 0.918 g/cc, available from Saudi Arabia Basic Industries Corporation (Saudi Arabia);

ENABLE™ 2010 is a $C_6$-LLDPE copolymer prepared using a metallocene catalyst and a gas phase polymerization process, having a melt index ($I_2$) of 1.0 g/10 min and a density of 0.920 g/cc, available from the Exxon Mobil Chemical Company;

EXCEED™ 3518 is a $C_6$-LLDPE copolymer prepared using a metallocene catalyst and a gas phase polymerization process, having a melt index ($I_2$) of 3.5 g/10 min and a density of 0.918 g/cc, available from the Exxon Mobil Chemical Company;

ATTANE™ 4607GC is a $C_6$-ULDPE copolymer, having a melt index ($I_2$) of 4.0 g/10 min and a density of 0.904 g/cc, available from The Dow Chemical Company (Midland, MI); and

ATTANE™ 4404G is a $C_8$-ULDPE copolymer, having a melt index ($I_2$) of 4.0 g/10 min and a density of 0.904 g/cc, available from The Dow Chemical Company (Midland, MI).

To fabricate the films in the following Examples, a multilayer cast film lines were used. Extruder configurations and operating temperatures are provided in Table 1 below. Also provided in Table 1 below are die temperatures, chill roll temperatures, line speed, and other operating parameters. The Examples demonstrate the capability of fabricating multilayer films having tunable strain hardening over a wide range of line speed and throughput machine configurations, shown in Table 1, from 260 to 700 m/min and from 175 to 1400 kg/hr, respectively.

| Table 1: Multilayer Film Fabrication Conditions | | | |
|---|---|---|---|
| **Fabrication conditions** | **Example 1** | **Example 2** | **Example 3** |
| Machine maker | Egan Davis Standard | Torninova | SML |
| Die type | Coat-hanger | Coat-hanger | Coat-hanger |
| Die width (m) | .9144 | 2 | 3 |
| Die gap (mm) | 0.508 | 0.7 | 0.7 |
| No. of layers | 5 | 5 | 7 |
| Layer configuration | A:B:C:D:E | A:B:C:B:D | A:B:D:C:D:B:E |
| Layer ratio (%) | 10:15:50:15:10 | 12:25:26:25:12 | 12:16:16:12:16:16:12 |
| Screw diameter (mm) | A, E = 50.8 | A, D = 55 | A, C, E = 60 |
| | B, C, D = 63.5 | B = 120 | B, D = 90 |
| | | C = 70 | |
| Screw length (L/D) | 30 | 30 | A, C, E = 28 <br> B, D = 33 |
| Melt temperature (°C) | 270 | 260 | 265 |
| Die temperature (°C) | 270 | 265 | 270 |
| Air gap (mm) | 88.9 | 25 | 20 |
| Total throughput (kg/hr) | 175 | 420 | 1400 |
| Chill-roller temperature (°C) | 21 | 26 | 27 |
| Line Speed (m/min) | 260 | 450 | 700 |

*Example 1*

Table 2 below lists Comparative Sample A, which includes various multiple layers including LLDPEs but lacking LDPE, and Sample 1, which is an embodiment of the present multilayer film composition. In particular, Comparative Sample A includes a core layer of $C_6$-LLDPE encapsulated by layers including various LLDPEs while Sample 1 includes a core layer of butene-LLDPE and LDPE encapsulated by layer of various LLDPEs. In Comparative Sample A and Sample 1, layer A corresponds to the cling layer.

| Table 2: Multilayer Film Compositions | | | |
|---|---|---|---|
| | **Layer configuration and composition** | **Layer ratio (% thickness)** | **Film Thickness (μm)** |
| **Comparative Sample A** | A: 70 wt% Butene 1221G1 + 30 wt% ATTANE™ 4404G <br> B: 60 wt% Butene 1221G1 + 40 wt% EXCEED™ 3518 <br> C: ENABLE™ 2010 <br> D: 60 wt% Butene 1221G1 + 40 wt% EXCEED™ 3518 <br> E: Butene 1221G1 | 10/15/50/ 15/10 | 12.5 |
| **Sample 1** | A: 70 wt% Butene 1211G1 + 30 wt% ATTANE™ 4404G <br> B: DOWLEX™ 2645G <br> C: 90 wt% Butene 1211G1 + 10 wt% LDPE 310E <br> D: DOWLEX™ 2645G <br> E: Butene 1211G1 | 10/15/50/ 15/10 | 12.5 |

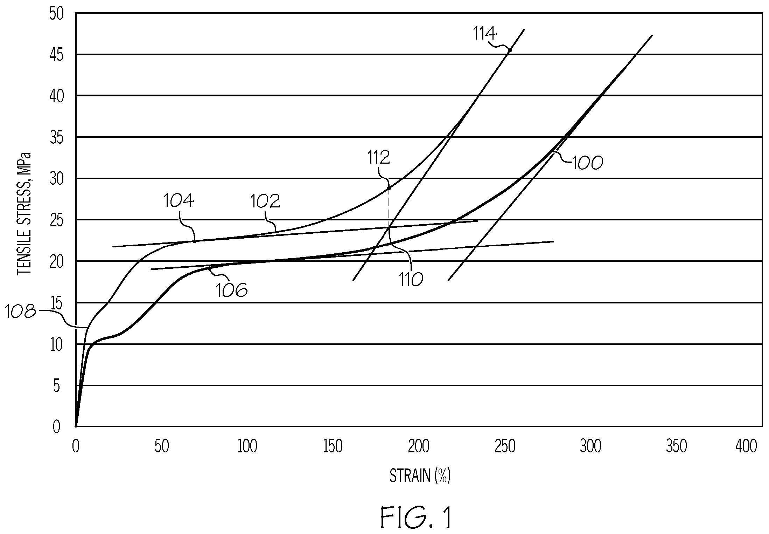

Each of the films of Comparative Sample A and Sample 1 were fabricated on a multilayer cast film line according to the conditions provided for Example 1 in Table 1 above. Each of the multilayer cast films were subjected to numerous tests, including puncture testing, tear resistance, dart impact, and tensile elongation testing. The results are presented in Table 3. The results of the tensile yield and elongation tests are presented in FIG. 1.

| Table 3: Tensile, Puncture, Tear Resistance, and Dart Impact Test Results | | |
|---|---|---|
| | **Comparative Sample A** | **Sample 1** |
| Film thickness (microns) | 12.5 | 12.5 |
| Tensile Strength at Yield MD (MPa) | 10.5 | 12.7 |
| Tensile Strength at 2nd Yield MD (MPa) | 19.7 | 22.1 |
| Tensile Strength at Break MD (MPa) | 43.6 | 44.7 |
| Tensile Ultimate Elongation MD (%) | 325.7 | 249.1 |
| Tensile Energy to Break MD (J) | 1.14 | 0.8 |
| Natural Draw Ratio (NDR) (%) | 233.8 | 183.6 |
| Tensile Stress at NDR (MPa) | 26.5 | 29.1 |
| Puncture Force at Break (N) | 27.34 | 23.73 |
| Puncture Energy at Break (J) | 1.99 | 1.53 |
| Elmendorf Tear MD (1600 g) | 0.59 | 0.24 |
| Elmendorf Tear TD (1600 g) | 3.20 | 3.84 |
| Dart Impact - Method A | 74.5 | 59.5 |
| Highlight Ultimate Stretch (%) | 218.1 | 256.1 |
| Highlight Stretch Force, 150% Stretch ($kg_f$) | 25.8 | 27.7 |

As shown in Table 3 and FIG. 1, the multilayer film of Sample 1 (plot 102) exhibited higher tensile yield and strain hardening at the second yield point than Comparative Sample A (plot 100). Specifically, the multilayer film of Sample 1 had a second yield point 104 of 22.1 MPa at a stretch % of 57.5%, while the film of Comparative Sample A (plot 100) had a second yield point 106 of 19.7 MPa at a stretch % of approximately 80%. Although an increased toughness was expected for the film of Comparative Sample A (compared to films including only ENABLE™ 2010) due to the inclusion of EXCEED™ 3518, the multilayer film of Sample 1 nonetheless was able to achieve high tear resistance (TD) with balanced toughness, particularly for film having a 12.5 μm thickness. Also, the Sample 1 (plot 102) achieved a tensile ultimate elongation in the machine direction of 249% (point 114) at the desired less than 300% for low stretch films, whereas Comparative Sample A (plot 100) exceeded 300% and measured at 325.7%.

FIG. 1 also shows that the tensile stress at yield (108) for Sample 1 was 12.7 MPa. The NDR 110 is also marked on FIG. 1 for Sample 1, as is the tensile stress at NDR 112 for Sample 1, to illustrate how these values are obtained. FIG. 1 also includes the tensile stress at break 114 for Sample 1, which corresponds to an elongation at break of 249.1%.

*Example 2*

Table 4 below lists Samples 2-5, which are embodiments of the present multilayer film composition. In particular, Samples 2-5 include LDPE in at least two different inner layers and two different $C_6$-LLDPE in at least two different layers. Samples 2-5 include a core layer with either a single $C_6$-LLDPE or two different $C_6$-LLDPE and do not include LDPE in the core layer. In Samples 2-5, layer A corresponds to the cling layer.

| Table 4: Multilayer Film Compositions | | | |
|---|---|---|---|
| | **Layer configuration and composition** | **Layer ratio (% thickness)** | **Film Thickness (μm)** |
| **Sample 2** | A: 7 wt% VISTAMAXX™ 6102 + 93 wt% Sabic® LLDPE 218B<br>B: 94 wt% DOWLEX™ 2607G + 6 wt% LOTRENE™ FE8000 LDPE<br>C: 80 wt% DOWLEX™ 2645G + 20 wt% DOWLEX™ 2607G<br>B: 94 wt% DOWLEX™ 2607G + 6 wt% LOTRENE™ FE8000 LDPE<br>D: DOWLEX™ 2607G | 12/25/26/25/12 | 8 |
| **Sample 3** | A: 7 wt% VISTAMAXX™ 6102 + 93 wt% Sabic® LLDPE 218B<br>B: 90 wt% DOWLEX™ 2607G + 10 wt% LOTRENE™ FE8000 LDPE<br>C: 80 wt% DOWLEX™ 2645G + 20 wt% DOWLEX™ 2607G<br>B: 90 wt% DOWLEX™ 2607G + 10 wt% LOTRENE™ FE8000 LDPE<br>D: DOWLEX™ 2607G | 12/25/26/25/12 | 8 |
| **Sample 4** | A: 7 wt% VISTAMAXX™ 6102 + 93 wt% Sabic® LLDPE 218B<br>B: 90 wt% DOWLEX™ 2607G + 10 wt% LOTRENE™ FE8000 LDPE<br>C: DOWLEX™ 2645G<br>B: 90 wt% DOWLEX™ 2607G + 10 wt% LOTRENE™ FE8000 LDPE<br>D: DOWLEX™ 2607G | 12/25/26/25/12 | 8 |
| **Sample 5** | A: 7 wt% VISTAMAXX™ 6102 + 93 wt% Sabic® LLDPE 218B<br>B: 94 wt% DOWLEX™ 2607G + 6 wt% LOTRENE™ FE8000 LDPE<br>C: DOWLEX™ 2645G<br>B: 94 wt% DOWLEX™ 2607G + 6 wt% LOTRENE™ FE8000 LDPE<br>D: DOWLEX™ 2607G | 12/25/26/25/12 | 8 |

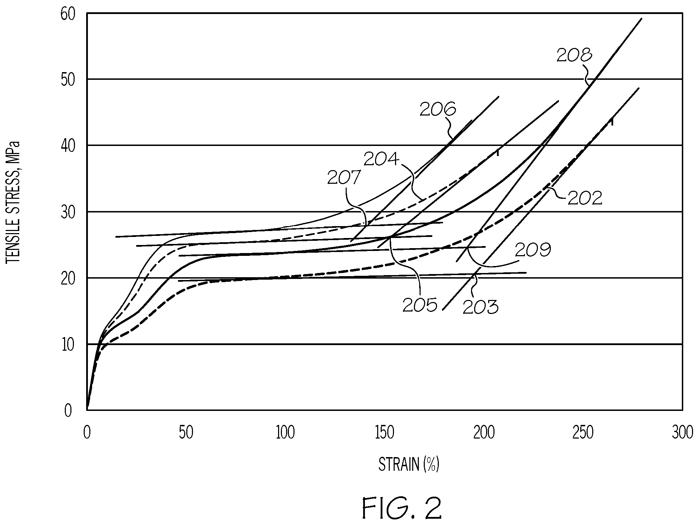

Each of the films of Samples 2-5 were fabricated on a multilayer cast film line according to the conditions provided for Example 2 in Table 1 above. Each of the multilayer cast films were subjected to numerous tests, including puncture testing, tear resistance, dart impact, and tensile elongation testing. The results are presented in Table 5. The results of the tensile yield and elongation tests are presented in FIG. 2.

| Table 5: Tensile, Puncture, Dart Impact, and Tear Resistance Test Results | | | | |
|---|---|---|---|---|
| | **Sample 2** | **Sample 3** | **Sample 4** | **Sample 5** |
| Film thickness (microns) | 8 | 8 | 8 | 8 |
| Tensile Strength at Yield MD (MPa) | 10.7 | 13.4 | 13.9 | 12.5 |
| Tensile Strength at 2nd Yield MD (MPa) | 19.6 | 25.2 | 26.6 | 23.4 |
| Tensile Strength at Break MD (MPa) | 42.1 | 42.2 | 49.9 | 52.5 |
| Tensile Ultimate Elongation MD (%) | 241.1 | 225.1 | 227.0 | 245.7 |
| Tensile Energy to Break MD (J) | 0.59 | 0.6 | 0.65 | 0.65 |
| NDR (%) | 195.0 | 150.0 | 137.0 | 191.8 |
| Tensile Strength at NDR (MPa) | 26.5 | 29.2 | 30.9 | 31.1 |
| Puncture Force at Break (N) | 19.88 | 20.52 | 18.02 | 19.51 |
| Puncture Energy at Break (J) | 1.27 | 1.21 | 0.91 | 1.16 |
| Elmendorf Tear MD (1600 g wt.) (g) | 0.14 | 0.09 | 0.07 | 0.1 |
| Elmendorf Tear TD (1600 g wt.) (g) | 3.36 | 3.62 | 3.28 | 2.81 |
| Dart Impact - Method A | 27 | 27 | 29.5 | 32 |
| Highlight Ultimate Stretch (%) | 151.0 | 155.5 | 125.6 | 180.9 |

(continued)

| Table 5: Tensile, Puncture, Dart Impact, and Tear Resistance Test Results | | | | |
|---|---|---|---|---|
| | Sample 2 | Sample 3 | Sample 4 | Sample 5 |
| Highlight Stretch Force, 100% stretch ($kg_f$) | 17.87 | 20.98 | 21.11 | 18.20 |

As shown in Table 5 and FIG. 2, each of Samples 2 (plot 202), 3 (plot 204), 4 (plot 206), and 5 (plot 208) exhibit an improved second yield strength than expected. Furthermore, without being bound by theory it is believed that the tensile strength at $2^{nd}$ yield point can be tuned with low percentage of LDPE from 3% to 7%. In particular, it is shown that 5% LDPE overall in the film structure from two different formulations (Samples 3 and 4) exhibit higher tensile strength at $2^{nd}$ yield than films containing 3% LDPE (Samples 2 and 5).

Furthermore, Table 5 and FIG. 2 show that Sample 2 has an NDR 203 of 195%, Sample 3 has an NDR 205 of 150%, Sample 4 has an NDR 207 of 137%, and Sample 5 has an NDR 209 of 191.8%. Accordingly, each of Samples 2-5 exhibits an NDR below 250%, and Tensile Ultimate Elongation MD and Highlight Ultimate Stretch values of less than 300%. Of particular distinction, the thin 8 micron films can be produced in cast film fabrication at 450 m/min line speed with good draw-down behavior, as shown in Table 1, while maintaining high level of mechanical film performance.

Table 6 below lists Comparative Sample B, which includes various multiple layers including LLDPEs but lacking LDPE, Comparative Sample C, which includes various $C_6$-LLDPEs in core, encapsulating, and release layers and does not include LDPE, and Samples 6 and 7, do not belong to the invention. Samples 6 and 7 include a LDPE in two separate inner layers, two different $C_6$-LLDPEs in at least two different inner layers, and a core layer (layer C) that includes a blend of two different $C_6$-LLDPEs without LDPE. In Comparative Samples B and C and Samples 6-7, layer E corresponds to the cling layer.

| Table 6: Multilayer Film Compositions | | | |
|---|---|---|---|
| | Layer configuration and composition | Layer ratio (% thickness) | Film Thickness ($\mu$m) |
| **Comparative Sample B** | A: EXCEED™ 3518<br>B: 70 wt% Sabic® LLDPE 218B +30 wt%ENABLE™ 2010<br>D: ENABLE™ 2010<br>C: ENABLE™ 2010<br>D: ENABLE™ 2010<br>B: 70 wt% Sabic® LLDPE 218B + 30 wt%ENABLE™ 2010<br>E: 91 wt% Sabic® LLDPE 218B + 9 wt% VISTAMAXX™ 6102 | 12/16/16/12/16/16/12 | 10 |
| **Comparative Sample C** | A: DOWLEX™ 2607G<br>B: DOWLEX™ 2607G<br>D: DOWLEX™ 2607G<br>C: 25 wt% DOWLEX™ 2607G + 75 wt% DOWLEX™ 2645G<br>D: DOWLEX™ 2607G<br>B: DOWLEX™ 2607G<br>E: 91 wt% DOWLEX™ 2607G + 9 wt% VISTAMAXX™ | 12/16/16/12/16/16/12 | 10 |
| **Sample 6** | A: DOWLEX™ 2607G<br>B: DOWLEX™ 2607G<br>D: DOWLEX™ 2607G + 10 wt% LDPE 310E<br>C: 25 wt% DOWLEX™ 2607G + 75 wt% DOWLEX™ 2645G<br>D: DOWLEX™ 2607G + 10 wt% LDPE 310E<br>B: DOWLEX™ 2607G<br>E: 91 wt% DOWLEX™ 2607G + 9 wt% VISTAMAXX™ | 12/16/16/12/16/16/12 | 10 |

(continued)

| Table 6: Multilayer Film Compositions | | | |
|---|---|---|---|
| | **Layer configuration and composition** | **Layer ratio (% thickness)** | **Film Thickness (μm)** |
| **Sample 7** | A: DOWLEX™ 2607G<br>B: DOWLEX™ 2607G<br>D: DOWLEX™ 2607G + 16 wt% LDPE 310E<br>C: 25 wt% DOWLEX™ 2607G + 75 wt% DOWLEX™ 2645G<br>D: DOWLEX™ 2607G + 16 wt% LDPE 310E<br>B: DOWLEX™ 2607G<br>E: 91 wt% DOWLEX™ 2607G + 9 wt% VISTAMAXX™<br>B: DOWLEX™ 2607G<br>E: 91 wt% DOWLEX™ 2607G + 9 wt% VISTAMAXX™ | 12/16/16/12/16/16/12 | 10 |

Each of the films of Comparative Samples B and C and Samples 6-7 were fabricated on a multilayer cast film line according to the conditions provided for Example 3 in Table 1 above. In each of the films, the cling is approximately 1% overall in structure. Accordingly, for a 10 μm thick film in which the cling layer is 12% of the thickness, the cling is about 9% in the cling layer.

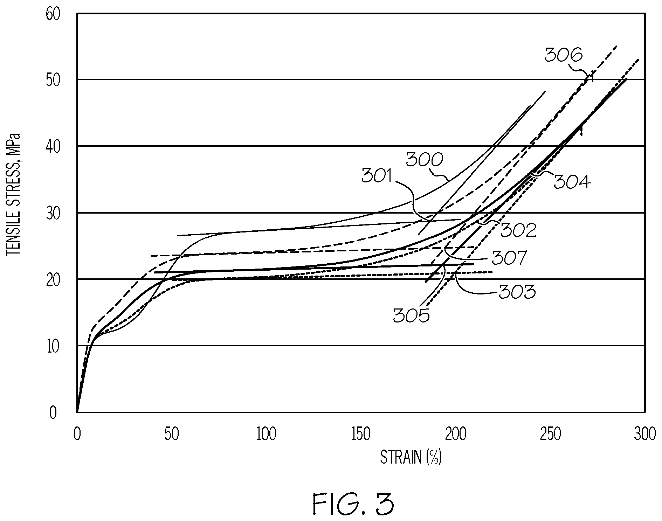

Each of the multilayer cast films were subjected to numerous tests, including puncture testing, tear resistance, dart impact, and tensile elongation testing. Highlight ultimate stretch and Highlight stretch force data was not available for Comparative Sample B. The results are presented in Table 7. The results of the tensile yield and elongation tests are presented in FIG. 3.

| Table 7: Tensile, Puncture, and Tear Resistance Test Results | | | | |
|---|---|---|---|---|
| | **Comparative Sample B** | **Comparative Sample C** | **Sample 6** | **Sample 7** |
| Film thickness (microns) | 10 | 10 | 10 | 10 |
| Tensile Strength at Yield MD (MPa) | 11.9 | 12.1 | 12.8 | 14.6 |
| Tensile Strength at 2nd Yield MD (MPa) | 26.4 | 20.1 | 21.2 | 23.9 |
| Tensile Strength at Break MD (MPa) | 48.7 | 48.2 | 49.0 | 51.6 |
| Tensile Ultimate Elongation MD (%) | 248.5 | 281.3 | 274.1 | 284.0 |
| Tensile Energy to Break MD (J) | 0.89 | 0.95 | 0.93 | 1.02 |
| NDR (%) | 188.3 | 200.5 | 194.0 | 193.0 |
| Tensile Strength at NDR (MPa) | 33.3 | 27.7 | 27.2 | 30.4 |
| Puncture Force at Break (N) | 25.24 | 22.35 | 22.11 | 18.96 |
| Puncture Energy at Break (J) | 1.49 | 1.50 | 1.48 | 1.11 |
| Elmendorf Tear MD (1600 g wt.) (g) | 0.24 | 0.19 | 0.19 | 0.12 |
| Elmendorf Tear TD (1600 g wt.) (g) | 2.82 | 3.36 | 2.97 | 2.44 |
| Highlight Ultimate Stretch (%) | N.D. | 236.2 | 210.7 | 240.6 |
| Highlight Stretch Force, 100% Stretch (kg$_f$) | N.D. | 22.8 | 23.3 | 24.7 |

As shown in Table 7 and FIG. 3, Sample 6 (plot 304) and Sample 7 (plot 306) demonstrate an improved second yield strength over Comparative Sample C (plot 302) and a comparable second yield strength to that of Comparative Sample B (plot 300), which lacks LDPE. These results demonstrate the ability to tune both the tensile strength at 2nd yield and the strain % of 2nd yield point via low levels of LDPE between 3-7 wt.% (i.e. increasing LDPE percentage increases the tensile strength at 2nd yield), to tailor the yielding of the film during stretch. Furthermore, the films of Samples 6 and 7 achieve low levels of stretch as demonstrated by an NDR at less than 250% (305 and 307, respectively), and Highlight Ultimate Stretch and Tensile ultimate elongation MD at less than 300%. The NDR 305 of Sample 6 and the NDR 307 of Sample 7 are less than the NDR 303 of Comparative Sample C and are similar to the NDR 301 of Comparative Sample B, which lacks LDPE. Of particular distinction, Samples 6 and 7 are successfully fabricated on a fast cast co-extrusion film line (700 m/min) and at high throughput (1400 kg/hr), as shown in Table 1, to demonstrate good draw-ability and high output capability, respectively, for thin 10 micron films.

It is further noted that terms like "preferably," "generally," "commonly," and "typically" are not utilized herein to limit the scope of the claimed invention or to imply that certain features are critical, essential, or even important to the structure or function of the claimed invention. Rather, these terms are merely intended to highlight alternative or additional features that may or may not be utilized in a particular embodiment of the present disclosure.

It will be apparent that modifications and variations are possible without departing from the scope of the disclosure defined in the appended claims. More specifically, although some aspects of the present disclosure are identified herein as preferred or particularly advantageous, it is contemplated that the present disclosure is not necessarily limited to these aspects.

## Claims

1. A multilayer cast film comprising:

   a cling layer comprising:

   from 50 wt.% to 95 wt.% butene-linear low density polyethylene (butene-LLDPE); and
   an ultra low density polyethylene (ULDPE) having a density of 0.895 g/cc to 0.915 g/cc wherein density is measured in accordance with ASTM D792 and a melt index ($I_2$) of from 2 g/10 min to 10 g/10 min when measured according to ASTM D1238 at 190 °C and 2.16 kg load;

   a propylene interpolymer comprising at least 60 wt.% units derived from propylene and between 1 and 40 wt% units derived from ethylene, wherein the propylene interpolymer has a density of from 0.840 g/cm$^3$ to 0.900 g/cm$^3$ wherein density is measured in accordance with ASTM D792 or ASTM D1505, a highest differential scanning calorimetry (DSC) melting peak temperature of from 50.0 °C to 120.0 °C, a melt flow rate, MFR2, of from 1 g/10 min to 100 g/10 min when measured according to ASTM D1238 at 230 °C and 2.16 kg load, and a molecular weight distribution (MWD) of less than 4.0 wherein molecular weight distribution is measured as described in the description; or
   blends thereof;
   a release layer comprising a first linear low density polyethylene (first LLDPE) having a density of from 0.915 to 0.938 g/cc wherein density is measured in accordance with ASTM D792 and a melt index ($I_2$) of from 0.5 g/10 min to 10 g/10 min; and
   at least one core layer disposed between the cling layer and the release layer, wherein each of the at least one core layers comprises a second linear low density polyethylene (second LLDPE) having a density of from 0.905 to 0.930 g/cc and a melt index ($I_2$) of from 0.5 g/10 min to 10 g/10 min;
   wherein:

   one or more of the cling layer, the release layer, or the at least one core layer further comprise a low density polyethylene having a density of 0.918 g/cc to 0.931 g/cc wherein density is measured in accordance with ASTM D792 or ASTM D1505 and a melt index ($I_2$) of from 0.15 g/10 min to 6 g/10 min when measured according to

   ASTM D1238 at 190 °C and 2.16 kg load;
   the multilayer cast film comprises from 3 wt% to 7 wt%, based on a total amount of polymers present in the multilayer cast film, of the low density polyethylene (LDPE);
   the multilayer cast film is defined by at least one of the following properties:

   a tensile ultimate elongation in the machine direction of less than 300%, as measured in accordance with ASTM D882;
   a natural draw ratio (NDR) of less than 250%; wherein the natural draw ratio is measured as described in the description; or
   a Highlight ultimate stretch of less than 300%, as measured in accordance with ASTM D4649; and

the multilayer cast film exhibits a machine direction tensile stress at second yield of at least 21.0 MPa for a film having a thickness of 10 microns or more in accordance with ASTM D882.

2. The multilayer cast film according to claim 1, wherein the LDPE is present in any one layer in amount of no more than 20 wt%, based on total amount of polymers present in the layer.

3. The multilayer cast film according to any of the preceding claims, wherein the release layer comprises from 3 to 20 wt%, based on the total amount of polymers present in the release layer, of the LDPE.

4. The multilayer cast film according to any of the preceding claims, wherein when two or more core layers are present, at least one of the core layers comprise from 3 to 20 wt%, based on the total amount of polymers present in that core layer, of the LDPE.

5. The multilayer cast film according to any of the preceding claims, wherein the cling layer further comprises a third linear low density polyethylene (third LLDPE) having a density of from 0.905 to 0.930 g/cc wherein density is measured in accordance with ASTM D792 and a melt index ($I_2$) of from 0.5 g/10 min to 10 g/10 min measured according to ASTM D1238 at 190 °C and 2.16 kg load.

6. The multilayer cast film according to claim 5, wherein two or more of the first LLDPE, second LLDPE, and third LLDPE are different from each other.

7. The multilayer case film according to claim 5, wherein the first LLDPE, the second LLDPE, and the third LLDPE has a MWD of from 3.5 to 5.0 and a comonomer distribution breadth index (CDBI) of less than 70%, measured by the method disclosed in the description.

8. The multilayer cast film according to claims 5 - 7, wherein the first LLDPE of the release layer is an ethylene-butene copolymer, and the second LLDPE in the at least one core layer adjacent to the release layer is an ethylene/$C_5$-$C_{20}$ alpha-olefin interpolymer.

9. The multilayer cast film according to claims 5 - 8, wherein the third LLDPE of the cling layer is an ethylene-butene copolymer, and the second LLDPE in the at least one core layer adjacent to the cling layer is an ethylene/$C_5$-$C_{20}$ alpha-olefin interpolymer.

10. The multilayer cast film according to claims 5 - 9, wherein the film comprises three core layers, wherein an inner core layer comprises ethylene-butene copolymer and outer core layers comprise an ethylene/$C_5$-$C_{20}$ alpha-olefin inter-polymer.

11. The multilayer cast film of claim 10, wherein the ethylene-butene copolymer has a melt index ($I_2$) ranging from 0.5 g/10 min to 10 g/10 min.

12. The multilayer cast film of claim 10 or 11, wherein the ethylene/$C_5$-$C_{20}$ alpha-olefin interpolymer has a density of from 0.905 g/cc to 0.930 g/cc.

13. The multilayer cast film of any of claims 10-12, wherein the ethylene/$C_5$-$C_{20}$ alpha-olefin interpolymer has a melt index ($I_2$) ranging from 0.25 g/10 min to 10 g/10 min.

14. The multilayer cast film of any preceding claim, wherein the core layer has a thickness of from 50% to 90% of the total thickness of the multilayer film.

15. The multilayer cast film of any preceding claim, wherein the multilayer film has a thickness from 5 $\mu$m to 15 $\mu$m.

**Patentansprüche**

1. Mehrschichtige Gießfolie, umfassend:
   eine Haftschicht, umfassend:

   von 50 Gew.-% bis 95 Gew.-% Buten-Lineares Polyethylen niedriger Dichte (Buten-LLDPE); und

ein Polyethylen niedriger Dichte mit einer Dichte von 0,895 g/cm$^3$ bis 0,915 g/cm$^3$, wobei die Dichte nach ASTM D792 gemessen wird, und einem Schmelzindex (I$_2$) von 2 g/10 Min. bis 10 g/10 Min., gemessen nach ASTM D1238 bei 190 °C und einer Belastung von 2,16 kg;

ein Propylen-Interpolymer, umfassend mindestens 60 Gew.-% Einheiten, die von Propylen abgeleitet sind, und zwischen 1 und 40 Gew.-% Einheiten, die von Ethylen abgeleitet sind, wobei das Propylen-Interpolymer eine Dichte von 0,840 g/cm$^3$ bis 0,900 g/cm$^3$ aufweist, wobei die Dichte nach ASTM D792 oder ASTM D1505 gemessen wird, eine höchste Differential-Scanning-Kalorimetrie (DSC)-Schmelzspitzentemperatur von 50,0 °C bis 120,0 °C, eine Schmelzflussrate, MFR2 von 1 g/10 Min. bis 100 g/10 Min., gemessen nach ASTM D1238 bei 230 °C und einer Belastung von 2,16 kg, und eine Molekulargewichtsverteilung (MWD) von weniger als 4,0, wobei die Molekulargewichtsverteilung wie in der Beschreibung angegeben gemessen wird; oder eine Mischungen davon;

eine Trennschicht, die ein erstes lineares Polyethylen niedriger Dichte (erstes LLDPE) mit einer Dichte von 0,915 bis 0,938 g/cm$^3$ umfasst, wobei die Dichte nach ASTM D792 gemessen wird, und einem Schmelzindex (I$_2$) von 0,5 g/10 Min. bis 10 g/10 Min.; und

mindestens einer Kernschicht, die zwischen der Haftschicht und der Trennschicht angeordnet ist, wobei jede der mindestens einen Kernschichten ein zweites lineares Polyethylen niedriger Dichte (zweites LLDPE) mit einer Dichte von 0,905 bis 0,930 g/cm$^3$ und einem Schmelzindex (I$_2$) von 0,5 g/10 Min. bis 10 g/10 Min. umfasst; worin:

eine oder mehrere der Haftschicht, der Trennschicht oder der mindestens einen Kernschicht ferner ein Polyethylen niedriger Dichte mit einer Dichte von 0,918 g/cm$^3$ bis 0,931 g/cm$^3$ umfassen, wobei die Dichte nach ASTM D792 oder ASTM D1505 gemessen wird, und einen Schmelzindex (I$_2$) von 0,15 g/10 Min. bis 6 g/10 Min., gemessen nach ASTM D1238 bei 190 °C und einer Belastung von 2,16 kg, aufweist;

die mehrschichtige Gießfolie 3 bis 7 Gew.-%, basierend auf der Gesamtmenge der in der mehrschichtigen Gießfolie vorhandenen Polymere, des Polyethylens niedriger Dichte (LDPE) umfasst;

die mehrschichtige Gießfolie durch mindestens eine der folgenden Eigenschaften definiert ist:

eine Zugfestigkeit in Maschinenrichtung von weniger als 300 %, gemessen nach ASTM D882; ein natürliches Zugverhältnis (NDR) von weniger als 250 %; wobei das natürliche Zugverhältnis wie in der Beschreibung angegeben gemessen wird; oder eine maximale Dehnung von weniger als 300 %, gemessen nach ASTM D4649; und

die mehrschichtige Gießfolie weist nach ASTM D882 eine Zugspannung in Maschinenrichtung bei einer zweiten Streckgrenze von mindestens 21,0 MPa für eine Folie mit einer Dicke von 10 Mikrometern oder mehr auf.

2. Mehrschichtige Gießfolie nach Anspruch 1, wobei das LDPE in einer beliebigen Schicht in einer Menge von nicht mehr als 20 Gew.-%, basierend auf der Gesamtmenge der in der Schicht vorhandenen Polymere, vorhanden ist.

3. Mehrschichtige Gießfolie nach einem der vorstehenden Ansprüche, wobei die Trennschicht 3 bis 20 Gew.-%, basierend auf der Gesamtmenge der in der Trennschicht vorhandenen Polymere, des LDPE umfasst.

4. Mehrschichtige Gießfolie nach einem der vorstehenden Ansprüche, wobei, wenn zwei oder mehr Kernschichten vorhanden sind, mindestens eine der Kernschichten 3 bis 20 Gew.-%, basierend auf der Gesamtmenge der in dieser Kernschicht vorhandenen Polymere, des LDPE umfasst.

5. Mehrschichtige Gießfolie nach einem der vorstehenden Ansprüche, wobei die Haftschicht ferner ein drittes lineares Polyethylen niedriger Dichte umfasst (drittes LLDPE) mit einer Dichte von 0,905 bis 0,930 g/cm$^3$ umfasst, wobei die Dichte nach ASTM D792 gemessen wird, und einen Schmelzindex (I$_2$) von 0,5 g/10 Min. bis 10 g/10 Min., gemessen nach ASTM D1238 bei 190 °C und einer Belastung von 2,16 kg.

6. Mehrschichtige Gießfolie nach Anspruch 5, wobei sich zwei oder mehr der ersten LLDPE, zweiten LLDPE und dritten LLDPE voneinander unterscheiden.

7. Mehrschichtige Gießfolie nach Anspruch 5, wobei das erste LLDPE, das zweite LLDPE und das dritte LLDPE eine Molekulargewichtsverteilung (MWD) von 3,5 bis 5,0 und einen Comonomerverteilungsbreitenindex (CDBI) von weniger als 70 % aufweisen, gemessen nach dem in der Beschreibung offenbarten Verfahren.

8. Mehrschichtige Gießfolie nach den Ansprüchen 5-7, wobei das erste LLDPE der Trennschicht ein Ethylen-Buten-Copolymer ist und das zweite LLDPE in der mindestens einen Kernschicht neben der Trennschicht ein Ethylen/$C_5$-$C_{20}$-alpha-Olefin-Interpolymer ist.

9. Mehrschichtige Gießfolie nach den Ansprüchen 5-8, wobei das dritte LLDPE der Haftschicht ein Ethylen-Buten-Copolymer ist und das zweite LLDPE in der mindestens einen Kernschicht neben der Trennschicht ein Ethylen/$C_5$-$C_{20}$-alpha-Olefin-Interpolymer ist.

10. Mehrschichtige Gießfolie nach den Ansprüchen 5-9, wobei die Folie drei Kernschichten umfasst, wobei eine innere Kernschicht ein Ethylen-Buten-Copolymer umfasst und äußere Kernschichten ein Ethylen/$C_5$-$C_{20}$-alpha-Olefin-Interpolymer umfassen.

11. Mehrschichtige Gießfolie nach Anspruch 10, wobei das Ethylen-Buten-Copolymer einen Schmelzindex ($I_2$) im Bereich von 0,5 g/10 Min. bis 10 g/10 Min. aufweist.

12. Mehrschichtige Gießfolie nach Anspruch 10 oder 11, wobei das Ethylen/$C_5$-$C_{20}$-Alpha-Olefin-Interpolymer eine Dichte von 0,905 g/cm$^3$ bis 0,930 g/cm$^3$ aufweist.

13. Mehrschichtige Gießfolie nach einem der Ansprüche 10-12, wobei das Ethylen/$C_5$-$C_{20}$-Alpha-Olefin-Interpolymer einen Schmelzindex ($I_2$) im Bereich von 0,25 g/10 Min. bis 10 g/10 Min. aufweist.

14. Mehrschichtige Gießfolie aus einem der vorstehenden Ansprüche, wobei die Kernschicht eine Dicke von 50 % bis 90 % der Gesamtdicke der mehrschichtigen Folie aufweist.

15. Mehrschichtige Gießfolie nach einem der vorstehenden Ansprüche, wobei die Mehrschichtfolie eine Dicke von 5 $\mu$m bis 15 $\mu$m aufweist.

**Revendications**

1. Film de coulée multicouche comprenant :
une couche adhésive comprenant :

de 50 % en poids à 95 % en poids de polyéthylène basse densité linéaire de butène (butène-LLDPE) ; et
un polyéthylène ultra basse densité (ULDPE) ayant une masse volumique allant de 0,895 g/cm$^3$ à 0,915 g/cm$^3$, dans lequel la masse volumique est mesurée conformément à la norme ASTM D792 et un indice de fusion ($I_2$) allant de 2 g/10 min à 10 g/10 min, lorsqu'on mesure selon la norme ASTM D1238 à 190 °C et à une charge de 2,16 kg ;
un interpolymère de propylène comprenant au moins 60 % en poids de motifs dérivées du propylène et entre 1 et 40 % en poids de motifs dérivés de l'éthylène, dans lequel l'interpolymère de propylène a une masse volumique allant de 0,840 g/cm$^3$ à 0,900 g/cm$^3$, dans lequel la masse volumique est mesurée conformément à la norme ASTM D792 ou ASTM D1505, une température de pic de fusion par calorimétrie différentielle à balayage (DSC) la plus élevée allant de 50,0 °C à 120,0 °C, un indice de fluidité à l'état fondu, MFR2, allant de 1 g/10 min à 100 g/10 min, lorsqu'il est mesuré selon la norme ASTM D1238 à 230 °C et une charge de 2,16 kg, et une distribution de masses moléculaires (MWD) inférieure à 4,0, dans lequel la distribution de masses moléculaires est mesurée comme décrit dans la description ; ou
des mélanges de ceux-ci ;
une couche antiadhésive comprenant un premier polyéthylène basse densité (premier LLDPE) linéaire ayant une masse volumique allant de 0,915 à 0,938 g/cm$^3$, dans lequel la masse volumique étant mesurée conformément à la norme ASTM D792 et un indice de fusion ($I_2$) allant de 0,5 g/10 min à 10 g/10 min ; et
au moins une couche centrale disposée entre la couche alimentaire et la couche antiadhésive, dans lequel chacune des au moins une couche centrale comprend un second polyéthylène basse densité (deuxième LLDPE) linéaire ayant une masse volumique allant de 0,905 à 0,930 g/cm$^3$ et un indice de fusion ($I_2$) allant de 0,5 g/10 min à 10 g/10 min ;
dans lequel :

une ou plusieurs parmi la couche d'adhérence, la couche antiadhésive ou l'au moins une couche centrale comprennent en outre un polyéthylène basse densité ayant une densité de 0,918 g/cm$^3$ à 0,931 g/cm$^3$, dans lequel la masse volumique est mesurée conformément à la norme ASTM D792 ou ASTM D1505 et un indice

de fusion (I$_2$) allant de 0,15 g/10 min à 6 g/10 min, lorsqu'il est mesuré selon la norme ASTM D1238 à 190 °C et une charge de 2,16 kg ;

le film de coulée multicouche comprend de 3 % en poids à 7 % en poids, sur la base d'une quantité totale de polymères présents dans le film coulé multicouche, du polyéthylène basse densité (LDPE) ;

le film de coulée multicouche est défini par au moins l'une des propriétés suivantes :

un allongement ultime à la traction dans le sens machine inférieur à 300 %, tel que mesuré conformément à la norme ASTM D882 ;

un rapport d'étirage naturel (NDR) inférieur à 250 % ; dans lequel le rapport d'étirage naturel est mesuré comme décrit dans la description ; ou

un étirement ultime de surbrillance inférieur à 300 %, tel que mesuré conformément à la norme ASTM D4649 ; et

le film de coulée multicouche présente une contrainte de traction dans le sens de la machine à la seconde limite d'élasticité d'au moins 21,0 MPa pour un film ayant une épaisseur de 10 microns ou plus conformément à la norme ASTM D882.

2. Film de coulée multicouche selon la revendication 1, dans lequel le LDPE est présent dans une quelconque couche en une quantité ne dépassant pas 20 % en poids, sur la base de la quantité totale de polymères présents dans la couche.

3. Film de coulée multicouche selon l'une quelconque des revendications précédentes, dans lequel la couche antiadhésive comprend de 3 à 20 % en poids, sur la base de la quantité totale de polymères présents dans la couche antiadhésive, du LDPE.

4. Film de coulée multicouche selon l'une quelconque des revendications précédentes, dans lequel, lorsque deux couches centrales ou plus sont présentes, au moins l'une des couches centrales comprend de 3 à 20 % en poids, sur la base de la quantité totale de polymères présents dans cette couche centrale, du LDPE.

5. Film de coulée multicouche selon l'une quelconque des revendications précédentes, dans lequel la couche d'adhérence comprend en outre un troisième polyéthylène basse densité (troisième LLDPE) linéaire ayant une densité allant de 0,905 à 0,930 g/cm$^3$, dans lequel la masse volumique est mesurée conformément à la norme ASTM D792 et à un indice de fusion (I$_2$) allant de 0,5 g/10 min à 10 g/10 min mesuré selon la norme ASTM D1238 à 190 °C et une charge de 2,16 kg.

6. Film de coulée multicouche selon la revendication 5, dans lequel deux ou plus parmi le premier LLDPE, le deuxième LLDPE et le troisième LLDPE sont différents les uns des autres.

7. Film de coulée multicouche selon la revendication 5, dans lequel le premier LLDPE, le deuxième LLDPE et le troisième LLDPE a un MWD allant de 3,5 à 5,0 et un indice de largeur de distribution de comonomères (CDBI) inférieur à 70 %, mesuré par le procédé décrit dans la description.

8. Film de coulée multicouche selon les revendications 5 à 7, dans lequel le premier LLDPE de la couche antiadhésive est un copolymère d'éthylène-butène, et le deuxième LLDPE dans l'au moins une couche centrale adjacente à la couche antiadhésive est un interpolymère éthylène/alpha-oléfine en C$_5$ à C$_{20}$.

9. Film de coulée multicouche selon les revendications 5 à 8, dans lequel le troisième LLDPE de la couche d'éthylène est un copolymère d'éthylène-butène, et le deuxième LLDPE dans l'au moins une couche centrale adjacente à la couche d'éthylène est un interpolymère éthylène/alpha-oléfine en C$_5$ à C$_{20}$.

10. Film de coulée multicouche selon les revendications 5 à 9, dans lequel le film comprend trois couches centrales, dans lequel une couche centrale interne comprend de l'éthylène-butène copolymère et les couches centrales externes comprennent un interpolymère éthylène/alpha-oléfine en C$_5$ à C$_{20}$.

11. Film de coulée multicouche selon la revendication 10, dans lequel le copolymère éthylène-butène a un indice de fusion (I$_2$) allant de 0,5 g/10 min à 10 g/10 min.

12. Film de coulée multicouche selon la revendication 10 ou 11, dans lequel l'interpolymère éthylène/alpha-oléfine en C$_5$ à C$_{20}$ a une masse volumique allant de 0,905 g/cm$^3$ à 0,930 g/cm$^3$.

**13.** Film de coulée multicouche selon l'une quelconque des revendications 10 à 12, dans lequel l'interpolymère éthylène/alpha-oléfine en $C_5$ à $C_{20}$ a une indice de fusion ($I_2$) allant de 0,25 g/10 min à 10 g/10 min.

**14.** Film de coulée multicouche selon l'une quelconque revendication précédente, dans lequel la couche centrale a une épaisseur allant de 50 % à 90 % de l'épaisseur totale du film multicouche.

**15.** Film de coulée multicouche selon l'une quelconque revendication précédente, dans lequel le film multicouche a une épaisseur de 5 $\mu$m à 15 $\mu$m.

FIG. 1

FIG. 2

FIG. 3

EP 3 573 828 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 62450772
- US 6361875 B1
- US 4599392 A
- US 5272236 A
- US 5278272 A
- US 5582923 A
- US 5733155 A
- US 3645992 A
- US 4076698 A
- US 3914342 A
- US 5854045 A
- US 7601409 B
- US 8372931 B
- WO 9303093 A
- US 5292845 A, Kawasaki

**Non-patent literature cited in the description**

- **TH.G. SCHOLTE ; N.L.J. MEIJERINK ; H.M. SCHOFFELEERS ; A.M.G. BRANDS**. *J. Appl. Polym. Sci.*, 1984, vol. 29, 3763-3782
- **E. P. OTOCKA ; R. J. ROE ; N. Y. HELLMAN ; P. M. MUGLIA**. *Macromolecules*, 1971, vol. 4, 507
- **WILLIAMS ; WARD**. *J. Polym. Sci., Polym. Let.*, 1968, vol. 6, 621
- **MONRABAL et al.** *Macromol. Symp.*, 2007, vol. 257, 71-79
- **J. C. RANDALL**. *Rev. Macromol. Chem. Phys.*, vol. C29, 201-317
- **S. DI MARTINO ; M. KECLCHTERMANS**. Determination of the Composition of Ethylene-Propylene-Rubbers Using 13C-NMR Spectroscopy. *Journal of Applied Polymer Science*, 1995, vol. 56, 1781-1787